# EUROPEAN PATENT APPLICATION

(11) **EP 4 818 838 A1**
(43) Date of publication of application: **07.10.2026**
(21) Application number: 24896007.2
(22) Date of filing: 08.10.2024
(51) Int. Cl.: G05D 1/43, G05D 1/622

(54) **VEHICLE OPERATION CONTROL METHOD AND APPARATUS, AND VEHICLE AND STORAGE MEDIUM**

(30) Priority: 28.11.2023 CN 202311604988
(71) Applicant: Beijing Jingdong Yuansheng Technology Co., Ltd., Beijing 100176 (CN)
(72) Inventor: LI, Yang, Beijing 100176 (CN); ZHANG, Liangliang, Beijing 100176 (CN)
(74) Representative: Böckmann genannt Dallmeyer, Georg Nikolas
(86) International application number: PCT/CN2024/123446
(87) International publication number: WO 2025/112913

(57) **Abstract**

A vehicle operation control method and apparatus, and a vehicle and a storage medium. The vehicle operation control method comprises: determining a guidance reference vector for guiding a vehicle to bypass an obstacle based on a relative velocity between the obstacle and the vehicle (101); determining an angular velocity change rate of a heading angle based on the guidance reference vector, the positions of the vehicle and the obstacle, a relative distance between the vehicle and the obstacle, and a velocity and the heading angle of the vehicle (102); controlling the vehicle to operate based on the angular velocity change rate of the heading angle, so that the vehicle bypasses the obstacle (103); and when the vehicle has bypassed the obstacle, determining guidance information of the vehicle based on a vehicle kinematics model, and controlling the vehicle to arrive at a target parking position based on the guidance information (104).

## Description

### CROSS-REFERENCE TO RELATED APPLICATIONS

The present application claims the priority to Chinese Patent Application No. 202311604988.8, filed on November 28, 2023, the content of which is hereby incorporated by reference in its entirety.

### TECHNICAL FIELD

The present application relates to the technical field of vehicle control, and in particular, to a vehicle operation control method and apparatus, a vehicle, a storage medium, and a computer program.

### BACKGROUND

In vehicle (automatic) control technology, for vehicle parking scenarios, heuristic algorithms such as the A* algorithm or spline curves are typically used to generate vehicle guidance lines. The vehicle guidance line is a guidance line from the current position of the vehicle to the parking spot, guiding the vehicle to bypass obstacles and arrive at the parking spot to complete parking.

### SUMMARY

According to a first aspect of the present disclosure, a vehicle operation control method is provided, comprising: determining a guidance reference vector for guiding a vehicle to bypass an obstacle based on a relative velocity between the obstacle and the vehicle; determining an angular velocity change rate of a heading angle based on the guidance reference vector, the positions of the vehicle and the obstacle, a relative distance between the vehicle and the obstacle, and a velocity and the heading angle of the vehicle; controlling the vehicle to operate based on the angular velocity change rate of the heading angle, so that the vehicle bypasses the obstacle; and when the vehicle has bypassed the obstacle, determining guidance information of the vehicle based on a vehicle kinematics model, and controlling the vehicle to arrive at a target parking position based on the guidance information, .

In some embodiments, the determining the guidance reference vector for guiding the vehicle to bypass the obstacle based on the relative velocity between the obstacle and the vehicle comprises: generating an obstacle circle corresponding to the non-passable area of the obstacle; determining a first tangent point and a second tangent point between a current position of the vehicle and the obstacle circle; selecting one of the first tangent point and the second tangent point as an obstacle avoidance reference point based on the relative velocity; and determining the guidance reference vector based on the current position of the vehicle and the obstacle avoidance reference point.

In some embodiments, the selecting one of the first tangent point and the second tangent point as the obstacle avoidance reference point based on the relative velocity comprises: determining a first variation amount of the relative velocity based on the current position of the vehicle and the first tangent point; determining a second variation amount of the relative velocity based on the current position of the vehicle and the second tangent point; determining a smaller variation amount from the first variation amount and the second variation amount, and determining the first tangent point or the second tangent point as the obstacle avoidance reference point based on the smaller variation amount.

In some embodiments, the determining the angular velocity change rate of the heading angle comprises: determining a first guidance reference angle and a second guidance reference angle based on the guidance reference vector and the positions of the vehicle and the obstacle, wherein the heading angle is an angle between the velocity of the vehicle and a reference line, the first guidance reference angle is an angle between a line connecting the vehicle and the obstacle and the guidance reference vector, and the second guidance reference angle is an angle between the reference line and the line connecting the vehicle and the obstacle; determining the angular velocity change rate of the heading angle based on the relative distance, the velocity and heading angle of the vehicle, the first guidance reference angle, and the second guidance reference angle; wherein, the angular velocity change rate of the heading angle is a sum of an angular velocity change rate of the first guidance reference angle and an angular velocity change rate of the second guidance reference angle.

In some embodiments, when an extension line of the velocity direction of the vehicle intersects the obstacle circle, determining that the vehicle is at risk of colliding with the obstacle.

**In** some embodiments, when the vehicle is controlled to operate based on the angular velocity change rate of the heading angle, if the relative distance increases gradually within a preset duration, determining that the vehicle has bypassed the obstacle.

In some embodiments, determining a first correlation between a travel distance change rate of the vehicle and the heading angle, and a second correlation between the angular velocity change rate of the heading angle and a front wheel steering angle of the vehicle; and constructing the vehicle kinematics model based on the first correlation and the second correlation.

In some embodiments, the determining guidance information of the vehicle based on the vehicle kinematics model comprises: performing discretization processing on the vehicle kinematics model to obtain first discrete data corresponding to the travel distance of the vehicle and second discrete data corresponding to the angular velocity change rate of the heading angle; and determining the guidance information based on the first discrete data and the second discrete data.

In some embodiments, the guidance information includes a guidance line for controlling the vehicle operation.

In some embodiments, determine the front wheel steering angle of the vehicle based on the angular velocity change rate of the heading angle, a distance between the front wheels and the rear wheels of the vehicle, and the velocity of the vehicle.

According to a second aspect of the present disclosure, a vehicle operation control apparatus is provided, comprising: a vector determination module configured to determine a guidance reference vector for guiding the vehicle to bypass an obstacle based on a relative velocity between the obstacle and the vehicle; a heading angle determination module configured to determine an angular velocity change rate of a heading angle based on the guidance reference vector, the positions of the vehicle and obstacle, a relative distance between the vehicle and the obstacle, and a velocity and the heading angle of the vehicle; an obstacle bypass control module configured to control the vehicle to operate based on the angular velocity change rate of the heading angle, so that the vehicle bypasses the obstacle; and a parking control module configured to determine guidance information of the vehicle based on a vehicle kinematics model when the vehicle has bypassed the obstacle, and control the vehicle to arrive at a target parking position based on the guidance information.

According to a third aspect of the present disclosure, a vehicle operation control apparatus is provided, comprising: a memory; and a processor coupled to the memory, wherein the processor is configured to execute the method as described above based on the instructions stored in the memory.

According to a fourth aspect of the present disclosure, a vehicle is provided, comprising the vehicle operation control apparatus as described above.

According to a fifth aspect of the present disclosure, a computer-readable storage medium storing computer instructions, which when executed by a processor, causes the processor to perform the vehicle operation control method as described above.

According to a sixth aspect of the present disclosure, a computer program is provided, comprising: instructions which, when executed by the processor, cause the processor to perform the vehicle operation control method as described above.

### BRIEF DESCRIPTION OF THE DRAWINGS

To clearly illustrate the technical solutions in the embodiments of the present disclosure or the related technologies, a brief introduction is now given to the accompanying drawings required for describing the embodiments or the related technologies. Obviously, the accompanying drawings in the following description are only some embodiments of the present disclosure. For those of ordinary skill in the art, other drawings can also be obtained from these accompanying drawings without taking an inventive step.
FIG.1 is a schematic flowchart of some embodiments of the vehicle operation control method according to the present disclosure;
FIG.2 is a schematic flowchart of determining a guidance reference vector in some embodiments of the vehicle operation control method according to the present disclosure;
FIG.3A is a schematic diagram for determining an angular velocity change rate of a heading angle;
FIG. 3B is a schematic diagram of a vehicle control operation path for the vehicle to arrive at a target parking position;
FIG. 4 is a schematic flowchart of determining guidance information in some embodiments of the vehicle operation control method according to the present disclosure;
FIG. 5 is a schematic module diagram of some embodiments of the vehicle operation control apparatus according to the present disclosure;
FIG. 6 is a schematic module diagram of other embodiments of the vehicle operation control apparatus according to the present disclosure.

### DETAILED DESCRIPTION

Exemplary embodiments of the present disclosure will now be described more fully with reference to the accompanying drawings. For the sake of clarity and conciseness, not all features of the embodiments are described in the Description. However, it should be understood that in the process of implementing the embodiments, many implementation-specific settings must be made to achieve the developer's specific goals. For example, complying with restrictions related to the apparatus and business, and these restrictions may vary with different implementations. Moreover, it should be understood that although the development work may be very complex and time-consuming, for those of ordinary skill in the art who benefit from the content of the present disclosure, such development work is merely a routine task.

It should be noted that unless otherwise specifically stated, the relative arrangement, numerical expressions, and numerical values of components and steps set forth in these embodiments do not limit the scope of the present disclosure.

Those of ordinary skill in the art can understand that the terms such as "first" and "second" in the embodiments of the present disclosure are only used to distinguish different steps, apparatuses, or modules, and do not represent any particular technical meaning or imply an inevitable logical order between them.

It should also be understood that in the embodiments of the present disclosure, "a plurality of" may mean two or more, and "at least one" may mean one, two, or more.

It should also be understood that for any component, data, or structure mentioned in the embodiments of the present disclosure, unless clearly defined or indicated to the contrary in the context, it can generally be understood as one or more.

In addition, the term "and/or" in the present disclosure is only a descriptive association relationship for describing the associated objects, indicating that there may be three relationships. For example, A and/or B may indicate: A exists alone, A and B exist simultaneously, and B exists alone. In addition, the character "/" in the present disclosure generally indicates that the associated objects before and after are in a "or" relationship.

It should also be understood that the descriptions of embodiments of the present disclosure focus on the differences between the embodiments, and the same or similar parts thereof can be referred to each other. For the sake of brevity, they will not be repeated one by one.

Meanwhile, it should also be understood that for the sake of description, the sizes of various parts shown in the drawings are not drawn according to the actual proportional relationship.

The following description of at least one exemplary embodiment is actually explanatory only and in no way serves as any limitation to the present disclosure and its application or use.

Technologies, methods, and apparatuses known to those skilled in the relevant art may not be discussed in detail, but where appropriate, said technologies, methods, and apparatuses should be regarded as part of the Description.

It should be noted that similar reference numerals and letters indicate similar items in the following drawings, so once an item is defined in one drawing, it does not need to be further discussed in subsequent drawings.

Moreover, in order to avoid obscuring the present disclosure due to unnecessary details, only the processing steps and/or equipment structures closely related to the solution of the present disclosure are illustrated in the drawings, and other details less relevant to the present disclosure are omitted. It should also be noted that similar reference numerals and letters in the drawings indicate similar items, and therefore once an item is defined in one drawing, there is no need to discuss it again in subsequent drawings.

In the related technologies known to the inventors, when a heuristic algorithm is used to obtain a vehicle guidance line, a large amount of calculation is required, which is time-consuming and involves a large number of iterations. Since parking spots include angle information, i.e., the final parking spot of the vehicle has angle restrictions and should be as parallel as possible to the road boundary, for the heuristic algorithm, the search changes from two-dimensional position information to three-dimensional, significantly increasing algorithm time consumption. Moreover, since the expansion of search points in the heuristic algorithm uses fixed unit searches or random searches, it is difficult to directly search for the parking spot after a large number of iterations. Therefore, the search termination condition is to stop the search when the distance to the parking spot is within a certain range, resulting in a parking trajectory that deviates from the parking spot, making it difficult to park accurately at the target spot and difficult to obtain the vehicle guidance line that satisfies vehicle kinematics.

When using spline curves to obtain the vehicle guide line, modeling is usually performed directly based on the start point and end point and transformed into an optimization problem, which requires a large number of iterations and is time-consuming. Moreover, less consideration is given to vehicle kinematics, making it difficult to obtain a vehicle guidance line that satisfies vehicle kinematics, and affecting vehicle control effect.

In view of this, one technical problem to be solved by the present application is to provide a vehicle operation control method. By determining a guidance reference vector for guiding the vehicle to bypass an obstacle, an angular velocity change rate of the heading angle is determined, and the vehicle is controlled to bypass the obstacle based on the angular velocity change rate of the heading angle. When the vehicle has bypassed the obstacle, the guidance information of the vehicle is determined based on the vehicle kinematics model to control the vehicle to arrive at the target parking position. This can reduce the calculation complexity, improve vehicle control efficiency, meet vehicle kinematics requirements, and enhance calculation efficiency and vehicle operation control accuracy.

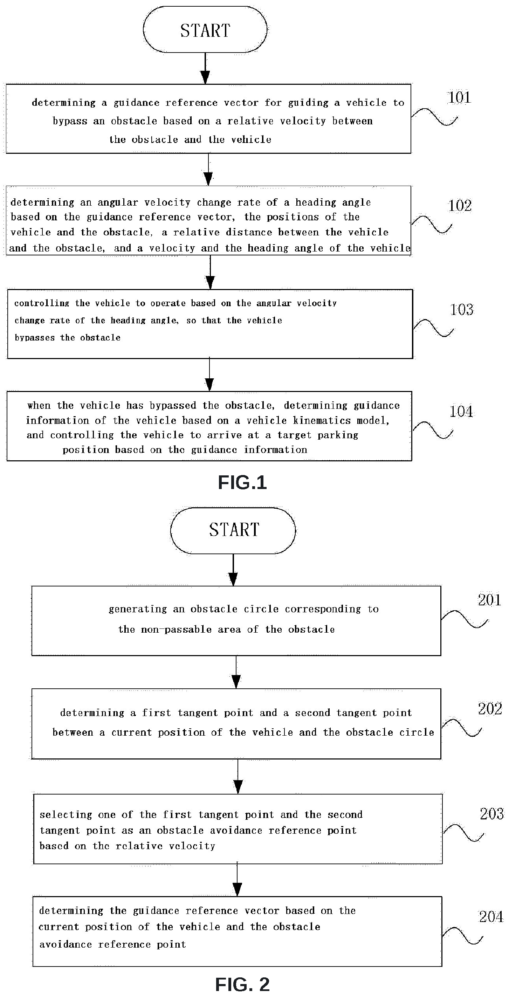

FIG. 1 is a schematic flowchart of some embodiments of the vehicle operation control method according to the present disclosure. As shown in FIG. 1:
Step 101, determine a guidance reference vector for guiding the vehicle to bypass an obstacle based on the relative velocity between the obstacle and the vehicle.

In some embodiments, vehicles can be of various types, such as cars, trucks, etc. Various detection devices can be installed on the vehicle, such as lidar, visual detection systems, etc. The obstacle is detected and its positional information is determined by the detection devices using various methods. Obstacles can be of various types, such as other vehicles, objects on the road, etc.

A target parking position is set, which can be a parking spot on the road, a parking spot within a parking lot, etc. Various methods can be used to determine the obstacles that need to be bypassed. For example, when it is determined that the vehicle, the obstacle, and the target parking position are in a straight line, or when it is determined that the non-passable area of the obstacle is located in the travel direction of the vehicle towards the target parking position, etc., the need to bypass the obstacle is determined. Various methods can be used to determine the guidance reference vector.

Step 102: determine the angular velocity change rate of the heading angle based on the guidance reference vector, the positions of the vehicle and the obstacle, the relative distance between the vehicle and the obstacle, as well as the velocity and the heading angle of the vehicle.

In some embodiments, a global coordinate system can be set. The guidance reference vector, the positions of the vehicle and the obstacle, the velocity and the heading angle of the vehicle, etc., are vectors, positions, velocities, angles, etc., in the global coordinate system. The velocity of the vehicle is a vector, including velocity magnitude and direction, the reference line can be a straight line parallel to the X-axis in the global coordinate system, and the heading angle is the angle between the velocity direction of the vehicle and the reference line, representing the orientation of the vehicle in the global coordinate system. Various methods can be employed to determine the angular velocity change rate of the heading angle.

Step 103, control the vehicle to operate based on the angular velocity change rate of the heading angle, so that the vehicle bypasses the obstacle.

Step 104, when the vehicle has bypassed the obstacle, determine the guidance information of the vehicle based on a vehicle kinematics model, and control the vehicle to arrive at the target parking position according to the guidance information.

When the vehicle has bypassed the obstacle, a vehicle kinematics model is constructed. The vehicle kinematics model can be various vehicle kinematics models in the global coordinate system, such as a bicycle model.

The vehicle operation control method of the present disclosure determines a guidance reference vector for guiding the vehicle to bypass the obstacle to determine the angular velocity change rate of the heading angle, and controls the vehicle to bypass the obstacle based on the angular velocity change rate of the heading angle. When the vehicle has bypassed the obstacle, the guidance information of the vehicle is determined based on the vehicle kinematics model to control the vehicle to arrive at the target parking position. This allows for determining the angular velocity change rate and guidance information in a relatively short time, and the generated angular velocity change rate and guidance information satisfy vehicle kinematics requirements, reducing calculation complexity, improving calculation efficiency and vehicle operation control accuracy, and enhancing vehicle control accuracy.

FIG. 2 is a schematic flowchart of determining the guidance reference vector in some embodiments of the vehicle operation control method according to the present disclosure. As illustrated in FIG. 2:
Step 201, generate an obstacle circle corresponding to the non-passable area of the obstacle.

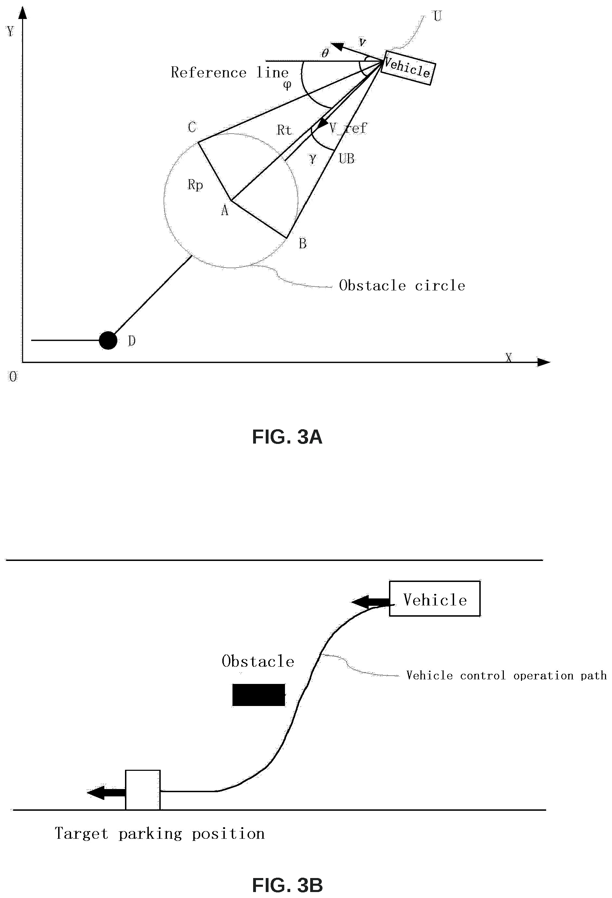

In some embodiments, as shown in FIG. 3A, the vehicle detects an obstacle A through a detection device and determines the positional information of the obstacle A in the global coordinate system XOY, i.e., the coordinates of the obstacle A in the global coordinate system XOY. The radius of the non-passable area is determined based on characteristics such as the type and shape of the obstacle A. For example, the radius of the non-passable area of the obstacle A is 2 meters. In the global coordinate system XOY, an obstacle circle corresponding to the non-passable area of the obstacle A is generated.

Step 202, determine a first tangent point and a second tangent point between the current position of the vehicle and the obstacle circle.

In some embodiments, the vehicle can determine its current positional information based on devices such as GPS. In the global coordinate system XOY, the current position U of the vehicle is determined, including its coordinates in the global coordinate system XOY. In the global coordinate system XOY, a first tangent point B and a second tangent point C between the current position U of the vehicle and the obstacle circle can be determined.

Step 203, select one of the first and second tangent points as an obstacle avoidance reference point according to the relative velocity.

In some embodiments, the relative distance between the current position U of the vehicle and the obstacle A is Rt, and the relative velocity between the current position U of the vehicle and the obstacle A is V_ref. Based on V_ref, one of the first tangent point B and the second tangent point C is selected as the obstacle avoidance reference point. Various methods can be used to select the obstacle avoidance reference point.

Step 204, determine the guidance reference vector based on the current position of the vehicle and the obstacle avoidance reference point.

In some embodiments, a first variation amount of the relative velocity is determined based on the current position of the vehicle and the first tangent point, and a second variation amount of the relative velocity is determined based on the current position of the vehicle and the second tangent point. The smaller variation amount is determined from the first variation amount and second variation amount, and based on this smaller variation amount, the first tangent point or the second tangent point is determined as the obstacle avoidance reference point.

For example, in order to make the vehicle bypass the obstacle A, the tangent of the obstacle circle is used as a reference to determine the direction with the smallest change in relative velocity so as to determine the obstacle avoidance reference point. As shown in FIG. 3A, based on the current position U of the vehicle and the first tangent point B, the magnitude of the velocity component of V_ref in the direction of the first tangent point B is determined as distance 1 between the current position U and the first tangent point B. Based on distance 1, the first variation amount of the relative velocity V_ref is determined (the first variation amount is approximately Rt - distance 1).

According to the current position U of the vehicle and the second tangent point C, the magnitude of the velocity component of V_ref in the direction of the second tangent point C is determined as distance 2 between the current position U and the second tangent point C. Based on UC, the second variation amount of the relative velocity V_ref is determined (the first variation amount is approximately Rt - distance 2). When the first variation amount is smaller than the second variation amount, the first tangent point B is selected as the obstacle avoidance reference point. Based on the current position U of the vehicle and the obstacle avoidance reference point B, the guidance reference vector is determined as vector UB with a start point at point U and an end point at point B.

In some embodiments, a first guidance reference angle and a second guidance reference angle are determined based on the guidance reference vector and the positions of the vehicle and the obstacle. The first guidance reference angle is the angle between the line connecting the vehicle and the obstacle and the guidance reference vector. The second guidance reference angle is the angle between the reference line and the line connecting the vehicle and the obstacle.

The angular velocity change rate of the heading angle is determined based on the relative distance, the velocity and heading angle of the vehicle, the first guidance reference angle, and the second guidance reference angle. The angular velocity change rate of the heading angle is the sum of the angular velocity change rate of the first guidance reference angle and the angular velocity change rate of the second guidance reference angle.

Proportional Navigation is a commonly used method for missile guidance. By using the proportional relationship between the longitudinal acceleration and the longitudinal line-of-sight angle, the longitudinal acceleration required for the missile to hit the target can be obtained. Then, the control variable can be obtained through the kinematic equation. Moreover, by solving the kinematic equation, a trajectory that satisfies the kinematic model and reaches the target point can be obtained. To achieve the angle constraint at the target point, biased proportional navigation can be adopted, which adds an angle constraint term to force the missile to hit the target at a fixed angle at a specified position.

The vehicle operation control method of the present disclosure can apply the algorithm concept of Proportional Navigation to vehicle control. According to Proportional Navigation, it can be determined that: $\dot{θ} = N \dot{q}$ (1-1) ${a}_{n} = \dot{θ} v$ (1-2) where, N is the proportional coefficient, q̇ is the angular velocity change rate of the line-of-sight angle, v is the current velocity of the vehicle, and θ̇ is the angular velocity change rate of the heading angle. As shown in FIG. 3A, the heading angle θ is the angle between the velocity v of the vehicle and the reference line (the reference line is a straight line parallel to the X-axis); the line-of-sight angle q represents the angle between the target line-of-sight and the reference line; aₙ is the longitudinal acceleration, and the direction of aₙ is perpendicular to the direction of the velocity v.

When the extension line of the velocity direction of the vehicle intersects with the obstacle circle, it is determined that there is a risk of collision between the vehicle and the obstacle. Therefore, to make the vehicle bypass the obstacle, it is necessary to make the relative velocity of the vehicle overlap with the guidance reference vector, or make the extension line of the velocity direction of the vehicle be outside the obstacle circle.

To make the vehicle bypass the obstacle, the guidance reference vector is determined as the vector UB with the start point at point U and the end point at point B. The direction of the guidance reference vector serves as the vector direction for guiding the vehicle to bypass the obstacle, leading to the following formulas: $sinφ = \frac{Y}{Rt} , cosφ = \frac{X}{Rt}$ (1-3) $sinγ = \frac{Rp}{Rt}$ (1-4) $\dot{Y} = v \times sinθ$ (1-5) where, φ is the second guidance reference angle, γ is the first guidance reference angle; Rt is the line connecting the vehicle and the obstacle; Y = yᵥₑₕ - y_{obs}, X = xᵥₑₕ - x_{obs}; yᵥₑₕ is the vertical coordinate of the current position U of the vehicle in the global coordinate system XOY, y_{obs} is the vertical coordinate of the position A of the obstacle in the global coordinate system XOY; xᵥₑₕ is the horizontal coordinate of the current position U of the vehicle in the global coordinate system XOY, x_{obs} is the horizontal coordinate of the position of the obstacle A in the global coordinate system XOY; Rp is the radius of the obstacle circle; Y is the change rate of Y.

The guidance method based on Proportional Navigation has the following constraints: ${a}_{n} = \dot{θ} v$ (1-6) $\dot{θ} = \dot{φ} + \dot{γ}$ (1-7) Where, φ̇ is the angular velocity change rate of the second guidance reference angle, γ̇ is the angular velocity change rate of the first guidance reference angle.

By differentiating formulas (1-3) and (1-4) with respect to time, and combining with formulas (1-5) and (1-7), the following equation can be obtained: $\dot{θ} = \frac{v \times sinθ}{Rt \times cosφ} - \frac{\dot{R} t}{Rt} \left(tanφ+tanγ\right)$ (1-8) wherein, Rt is the change rate of Rt.

The angular velocity change rate θ̇ of the heading angle is determined based on formula (1-8), and the operation of the vehicle is controlled based on θ̇. To satisfy the requirement for the heading angle (course angle), formula (1-8) prompts the heading angle to move beyond the tangent direction of the obstacle circle. The guidance reference vector UB (tangent line) will cause formula (1-8) to converge. Various control methods can be used to control the operation of the vehicle based on θ̇ and in combination with other parameters of formula (1-8). In the process of controlling the operation of the vehicle based on θ̇, the various parameters required by formula (1-8) are obtained at regular intervals (e.g., every 2 seconds, 3 seconds, etc.), and θ̇ is calculated at regular intervals according to formula (1-8) to control the operation of the vehicle based on θ̇ so that the vehicle bypasses the obstacle.

In some embodiments, in the operation control of the vehicle, when the vehicle is controlled to operate based on the angular velocity change rate of the heading angle, if the relative distance increases gradually within a preset duration , it is determined that the vehicle has bypassed the obstacle.

For example, during the process of controlling the vehicle to bypass the obstacle based on θ̇, if it is determined that the relative distance between the vehicle and the obstacle increases gradually within a preset duration (e.g., 4 seconds, 5 seconds, 6 seconds, etc.), it is determined that the vehicle has bypassed the obstacle. For example, the preset duration is 4 seconds. If it is determined that the relative distance at the 1st second is 18 meters, the relative distance at the 2nd second is 22 meters, the relative distance at the 3rd second is 25 meters, and the relative distance at the 4th second is 26 meters, then it is determined that the relative distance between the vehicle and the obstacle increases gradually, and it is determined that the vehicle has bypassed the obstacle.

The vehicle operation control method of the present disclosure applies the algorithm concept of Proportional Navigation to vehicle control, which can quickly generate control information for the vehicle to bypass obstacles, satisfy the vehicle kinematics constraints, improve computational efficiency and vehicle operation control accuracy, and reduce computational complexity.

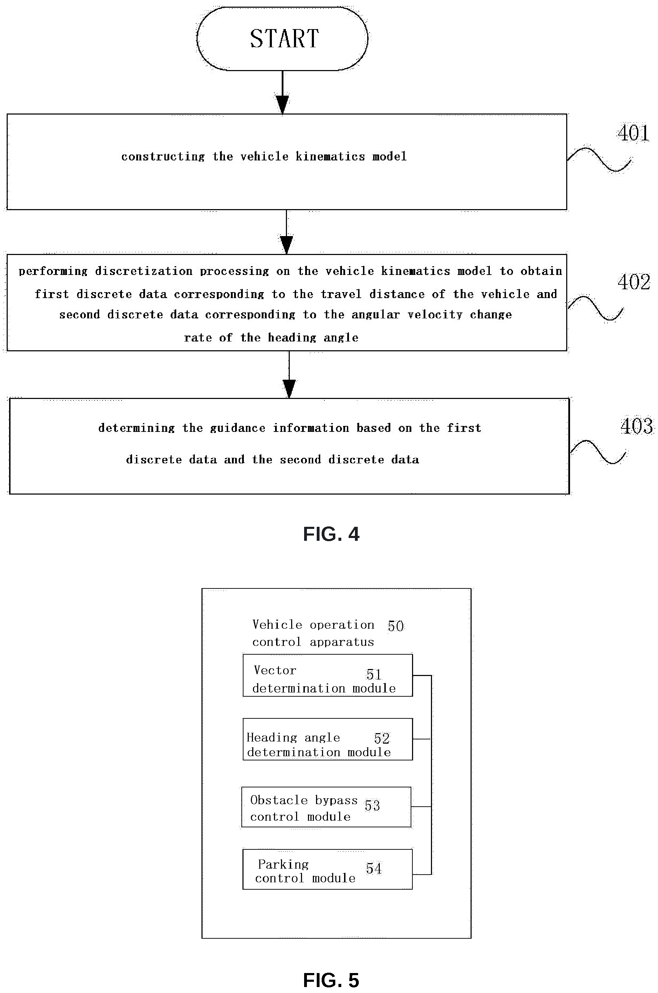

FIG. 4 is a schematic flowchart of determining guidance information in some embodiments of the vehicle operation control method according to the present disclosure, as shown in FIG. 4:
Step 401, construct a vehicle kinematics model.

In some embodiments, after the vehicle has bypassed the obstacle, a first correlation between the travel distance change rate of the vehicle and the heading angle, and a second correlation between the angular velocity change rate of the heading angle and the front wheel steering angle of the vehicle are determined. The vehicle kinematics model is constructed based on the first correlation and the second correlation.

For example, after the vehicle has bypassed the obstacle, the determined vehicle kinematics model (vehicle kinematic equation) is as follows: $\begin{matrix}\dot{x} = ν cos \left(θ\right) \\ \dot{y} = ν sin \left(θ\right) \\ \dot{θ} = \frac{ν tan \left(δ\right)}{L}\end{matrix}$ (1-9)

Where, L is the distance between the front wheels and the rear wheels of the vehicle (the distance between the front wheels and the rear wheels along the direction of the vehicle); δ is the front wheel steering angle of the vehicle; the travel distance change rate of the vehicle includes x and ẏ; ẋ is the travel distance change rate of the vehicle on the X-axis in the global coordinate system XOY, i.e., the velocity component of the vehicle velocity v on the X-axis; ẏ is the travel distance change rate of the vehicle on the Y-axis direction in the global coordinate system XOY, i.e., the velocity component of the vehicle velocity v on the Y-axis.

Step 402, perform discretization processing on the vehicle kinematics model to obtain first discrete data corresponding to the travel distance of the vehicle and second discrete data corresponding to the angular velocity change rate of the heading angle.

The front wheel steering angle of the vehicle is determined based on the angular velocity change rate of the heading angle, the distance between the front wheels and rear wheels of the vehicle, and the velocity of the vehicle. For example, to satisfy the vehicle kinematics model, it is necessary to limit the front wheel steering angle at a given vehicle velocity. The following can be obtained by combining formula (1-9) with formula (1-8): $δ = arctan \left(\frac{\dot{θ} L}{v}\right)$ (1-10)

Where, θ̇ in formula (1-10) can be obtained by various methods. For example, θ̇ can be calculated by formula (1-1), q in formula (1-1) is the line-of-sight angle, and q is the angle between the target line-of-sight (the line connecting the current position of the vehicle and the target parking position) and the reference line in FIG. 3A.

The front wheel steering angle control variable (front wheel steering angle of the vehicle) can be solved by using the Proportional Navigation method through formula (1-10). By substituting the front wheel steering angle control variable into formula (1-9), the vehicle kinematic differential equation can be obtained. The differential equation of formula (1-9) can be solved by methods such as the Runge-Kutta method or the Euler method.

For example, the differential equation of formula (1-9) can be quickly solved by the Euler method, yielding: $\begin{matrix}\left\{\begin{matrix}Δx = ν cos \left(θ\right) \\ Δ y = ν sin \left(θ\right) \\ Δ θ = \frac{ν tan \left(δ\right)}{L}\end{matrix}\right. \\ x \left(k+1\right) = x \left(k\right) + ΔxΔ t \\ y \left(k+1\right) = y \left(k\right) + ΔyΔ t \\ θ \left(k+1\right) = θ \left(k\right) + Δ θ Δ t\end{matrix}$ (1-11)

Where, the first discrete data corresponding to the travel distance of the vehicle includes △x and △y, which are the components of the travel distance variation of the vehicle on the X-axis and Y-axis of the global coordinate system XOY, respectively. The second discrete data corresponding to the angular velocity change rate of the heading angle is △θ.

Step 403, determine the guidance information based on the first discrete data and the second discrete data.

After bypassing the obstacle and in the absence of a road reference line, a vehicle kinematics model is constructed. Discretization processing is performed on the vehicle kinematics model to obtain discrete data and determine guidance information. The guidance information can be a guidance line determined based on the discrete data, and the operation of the vehicle is controlled based on this guidance line.

The vehicle operation control method of the present disclosure, in the presence of obstacles, determines a guidance reference vector to make the relative velocity between the vehicle and the obstacle coincide with the guidance reference vector. It uses the proportional navigation method combined with the relative relationship between the vehicle and the obstacle to determine the angular velocity change rate of the heading angle and guide the vehicle to bypass the obstacle. When the vehicle has bypassed the obstacle, the guidance information of the vehicle is determined by solving the vehicle kinematic differential equation, and the vehicle is controlled to arrive at the target parking position according to the guidance information. For example, the obstacle avoidance control for the vehicle and the control operation path for controlling the vehicle to arrive at the target parking position after obstacle avoidance are as shown in the vehicle control operation path in FIG. 3B.

The vehicle operation control method of the present disclosure can reduce calculation complexity, improve vehicle control efficiency, satisfy vehicle kinematics requirements, enhance calculation efficiency and vehicle operation control accuracy, and improve user experience.

In some embodiments, as shown in FIG. 5, the present disclosure provides a vehicle operation control apparatus 50, comprising a vector determination module 51, a heading angle determination module 52, an obstacle bypass control module 53, and a parking control module 54. The vector determination module 51 determines a guidance reference vector for guiding the vehicle to bypass an obstacle based on a relative velocity between the obstacle and the vehicle. The heading angle determination module 52 determines the angular velocity change rate of the heading angle based on the guidance reference vector, the positions of the vehicle and the obstacle, a relative distance between the vehicle and the obstacle, as well as a velocity and the heading angle of the vehicle.

The obstacle bypass control module 53 controls the vehicle to operate based on the angular velocity change rate of the heading angle, so that the vehicle bypasses the obstacle. The parking control module 54 determines the guidance information of the vehicle based on the vehicle kinematics model when the vehicle has bypassed the obstacle, and controls the vehicle to arrive at the target parking position according to the guidance information.

In some embodiments, the vector determination module 51 generates an obstacle circle corresponding to the non-passable area of the obstacle, and determines the first and second tangent points between the current position of the vehicle and the obstacle circle. The vector determination module 51 selects one of the first and second tangent points as the obstacle avoidance reference point based on the relative velocity, and determines the guidance reference vector based on the current position of the vehicle and the obstacle avoidance reference point.

For example, the vector determination module 51 can determine a first variation amount of the relative velocity based on the current position of the vehicle and the first tangent point, and determine a second variation amount of the relative velocity based on the current position of the vehicle and the second tangent point. The vector determination module 51 determines the smaller variation amount from the first variation amount and the second variation amount, and determines the first tangent point or the second tangent point as the obstacle avoidance reference point based on the smaller variation amount.

In some embodiments, the heading angle determination module 52 determines a first guidance reference angle and a second guidance reference angle based on the guidance reference vector and the positions of the vehicle and the obstacle. The heading angle determination module 52 determines the angular velocity change rate of the heading angle based on the relative distance, the velocity and the heading angle of the vehicle, the first guidance reference angle, and the second guidance reference angle. The heading angle determination module 52 determines that there is a risk of collision between the vehicle and the obstacle when the extension line of the velocity direction of the vehicle intersects with the obstacle circle.

The obstacle bypass control module 53, when controlling the vehicle to operate based on the angular velocity change rate of the heading angle, determines that the vehicle has bypassed the obstacle if the relative distance increases gradually within a preset duration. The parking control module 54 determines a first correlation between the travel distance change rate of the vehicle and the heading angle, and a second correlation between the angular velocity change rate of the heading angle and the front wheel steering angle of the vehicle. The parking control module 54 constructs a vehicle kinematics model based on the first correlation and the second correlation.

The parking control module 54 determines the front wheel steering angle of the vehicle based on the angular velocity change rate of the heading angle, the distance between the front wheels and rear wheels of the vehicle, and the velocity of the vehicle. The parking control module 54 performs discretization processing on the vehicle kinematics model to obtain first discrete data corresponding to the travel distance of the vehicle and second discrete data corresponding to the angular velocity change rate of the heading angle, and determines the guidance information based on the first discrete data and the second discrete data.

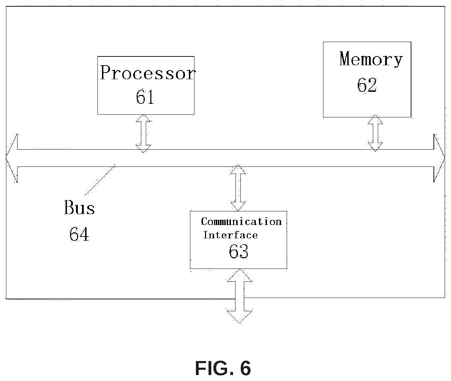

In some embodiments, as shown in FIG. 6, the present disclosure provides a vehicle operation control apparatus, which may include a memory 62, a processor 61, a communication interface 63, and a bus 64. The memory 62 is used to store instructions, the processor 61 is coupled to the memory 62, and the processor 61 is configured to execute the above-mentioned vehicle operation control method applied to a terminal based on the instructions stored in the memory 62.

The memory 62 can be a high-speed RAM memory, a non-volatile memory, etc., and can also be a memory array. The memory 62 may also be partitioned and combined into virtual volumes according to certain rules. The processor 61 can be a central processing unit (CPU), an application-specific integrated circuit (ASIC), or one or more integrated circuits configured to perform the vehicle operation control method applied to the terminal as described in the present disclosure.

In some embodiments, the present disclosure provides a vehicle, which includes the vehicle operation control apparatus according to any one of the above embodiments. The vehicle can be a car, a truck, etc. The vehicle operation control apparatus can be applied to an automatic control device of the vehicle. The vehicle may have an unmanned driving mode or an assisted driving mode, and the automatic control device can perform unmanned control or assisted control on the vehicle.

In some embodiments, the present disclosure provides a computer-readable storage medium storing computer instructions that, when executed by a processor, implement the vehicle operation control method according to any one of the above embodiments.

The computer-readable storage medium can be any combination of one or more readable media. A readable medium can be a readable signal medium or a readable storage medium. The readable storage medium can include, but is not limited to, electrical, magnetic, optical, electromagnetic, infrared, or semiconductor systems, apparatuses, or device, or any combination thereof. More specific examples of the readable storage medium (a non-exhaustive list) include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In some embodiments, the present disclosure provides a computer program, comprising: instructions that, when executed by a processor, cause the processor to execute the vehicle operation control method according to any one of the above embodiments. The vehicle operation control method, apparatus, vehicle, storage medium, and computer program in the above embodiments determine a guidance reference vector for guiding the vehicle to bypass an obstacle to determine the angular velocity change rate of the heading angle, and control the vehicle to bypass the obstacle based on the angular velocity change rate of the heading angle. When the vehicle has bypassed the obstacle, the guidance information of the vehicle is determined based on the vehicle kinematics model to control the vehicle to arrive at the target parking position. This can reduce calculation complexity, improve vehicle control efficiency, satisfy vehicle kinematics requirements, enhance calculation efficiency and vehicle operation control accuracy, and improve user experience.

The above describes the basic principles of the present disclosure in conjunction with specific embodiments. However, it should be noted that the advantages, benefits, effects, etc., mentioned in the present disclosure are for illustration only and not limiting. It cannot be considered that these advantages, benefits, effects, etc., are necessary for each embodiment of the present disclosure. Additionally, the specific details disclosed above are exemplary and for the convenience of understanding only, and are not intended as limitations. The above details do not limit the present disclosure to be implemented by using the above specific details.

Each embodiment in the specification is described in a progressive manner. Each embodiment focuses on the differences from other embodiments, and the same or similar parts between the various embodiments can be referred to each other. For the system embodiment, since it basically corresponds to the method embodiment, the description is relatively simple. The relevant parts can be referred to the description of the method embodiments.

The block diagrams of devices, apparatuses, equipment, and systems involved in the present disclosure are only exemplary examples and are not intended to require or imply that they must be connected, arranged, or configured in the manner shown in the block diagrams. As will be recognized by those of ordinary skill in the art, these devices, apparatuses, equipment, and systems can be connected, arranged, or configured in any manner. Terms such as "including", "comprising", "having", etc., are open-ended terms, meaning "including but not limited to", and can be used interchangeably therewith. The term "or" and "and" used herein refer to "and/or" and can be used interchangeably therewith unless the context clearly indicates otherwise. The term "such as" used herein refers to "such as but not limited to" and can be used interchangeably therewith.

It should also be noted that in the devices, apparatuses, and methods of the present disclosure, the components or steps can be decomposed and/or recombined. Such decomposition and/or recombination should be considered as equivalent solutions of the present disclosure.

The above description of the disclosed aspects is provided to enable those of ordinary skill in the art to make or use the present disclosure. Various modifications to these aspects will be readily apparent to those of ordinary skill in the art, and the general principles defined herein can be applied to other aspects without departing from the scope of the present disclosure. Therefore, the present disclosure is not intended to be limited to the aspects shown herein, but is to be accorded the widest scope consistent with the principles and novel features disclosed herein.

The above description has been given for the purpose of illustration and description. Moreover, this description is not intended to limit the embodiments of the present disclosure to the forms disclosed herein. Although several exemplary aspects and embodiments have been discussed above, those of ordinary skill in the art will understand that the above embodiments are illustrative only and do not limit the scope of this disclosure. Those of ordinary skill in the art should also understand that the above embodiments can be combined, modified, or substituted without departing from the scope and spirit of the present disclosure.

## Claims

1. A vehicle operation control method, comprising:
determining a guidance reference vector for guiding a vehicle to bypass an obstacle based on a relative velocity between the obstacle and the vehicle;
determining an angular velocity change rate of a heading angle based on the guidance reference vector, the positions of the vehicle and the obstacle, a relative distance between the vehicle and the obstacle, and a velocity and the heading angle of the vehicle;
controlling the vehicle to operate based on the angular velocity change rate of the heading angle, so that the vehicle bypasses the obstacle; and
when the vehicle has bypassed the obstacle, determining guidance information of the vehicle based on a vehicle kinematics model, and controlling the vehicle to arrive at a target parking position based on the guidance information.

2. The vehicle operation control method according to claim 1, wherein the determining the guidance reference vector for guiding the vehicle to bypass the obstacle based on the relative velocity between the obstacle and the vehicle comprises:
generating an obstacle circle corresponding to the non-passable area of the obstacle;
determining a first tangent point and a second tangent point between a current position of the vehicle and the obstacle circle;
selecting one of the first tangent point and the second tangent point as an obstacle avoidance reference point based on the relative velocity; and
determining the guidance reference vector based on the current position of the vehicle and the obstacle avoidance reference point.

3. The vehicle operation control method according to claim 2, wherein the selecting one of the first tangent point and the second tangent point as the obstacle avoidance reference point based on the relative velocity comprises:
determining a first variation amount of the relative velocity based on the current position of the vehicle and the first tangent point;
determining a second variation amount of the relative velocity based on the current position of the vehicle and the second tangent point;
determining a smaller variation amount from the first variation amount and the second variation amount, and determining the first tangent point or the second tangent point as the obstacle avoidance reference point based on the smaller variation amount.

4. The vehicle operation control method according to claim 2 or 3, wherein the determining the angular velocity change rate of the heading angle comprises:
determining a first guidance reference angle and a second guidance reference angle based on the guidance reference vector, and the positions of the vehicle and the obstacle,
wherein the heading angle is an angle between the velocity of the vehicle and a reference line, the first guidance reference angle is an angle between a line connecting the vehicle and the obstacle and the guidance reference vector, and the second guidance reference angle is an angle between the reference line and the line connecting the vehicle and the obstacle;
determining the angular velocity change rate of the heading angle based on the relative distance, the velocity and the heading angle of the vehicle, the first guidance reference angle, and the second guidance reference angle; and
wherein, the angular velocity change rate of the heading angle is a sum of an angular velocity change rate of the first guidance reference angle and an angular velocity change rate of the second guidance reference angle.

5. The vehicle operation control method according to any of claims 2 to 4, further comprising:
when an extension line of the velocity direction of the vehicle intersects the obstacle circle,
determining that the vehicle is at risk of colliding with the obstacle.

6. The vehicle operation control method according to any of claims 1 to 5, further comprising:
in a case where the vehicle is controlled to operate based on the angular velocity change rate of the heading angle, if the relative distance increases gradually within a preset duration, determining that the vehicle has bypassed the obstacle.

7. The vehicle operation control method according to any of claims 1 to 6, further comprising:
determining a first correlation between a travel distance change rate of the vehicle and the heading angle, and a second correlation between the angular velocity change rate of the heading angle and a front wheel steering angle of the vehicle; and
constructing the vehicle kinematics model based on the first correlation and the second correlation.

8. The vehicle operation control method according to claim 7, the determining the guidance information of the vehicle based on the vehicle kinematics model comprises:
performing discretization processing on the vehicle kinematics model to obtain first discrete data corresponding to the travel distance of the vehicle and second discrete data corresponding to the angular velocity change rate of the heading angle;
determining the guidance information based on the first discrete data and the second discrete data.

9. The vehicle operation control method according to claim 7 or 8, wherein, the guidance information includes a guidance line for controlling the vehicle operation.

10. The vehicle operation control method according to any of claims 7 to 9, further comprising:
determining the front wheel steering angle of the vehicle based on the angular velocity change rate of the heading angle, a distance between the front wheels and the rear wheels of the vehicle, and the velocity of the vehicle.

11. A vehicle operation control apparatus, comprising:
a vector determination module configured to determine a guidance reference vector for guiding a vehicle to bypass an obstacle based on a relative velocity between the obstacle and the vehicle;
a heading angle determination module configured to determine an angular velocity change rate of a heading angle based on the guidance reference vector, the positions of the vehicle and the obstacle, a relative distance between the vehicle and the obstacle, and a velocity and the heading angle of the vehicle;
an obstacle bypass control module configured to control the vehicle to operate based on the angular velocity change rate of the heading angle, so that the vehicle bypasses the obstacle;
a parking control module configured to determine guidance information of the vehicle based on a vehicle kinematics model when the vehicle has bypassed the obstacle, and control the vehicle to arrive at a target parking position based on the guidance information.

12. A vehicle operation control apparatus, comprising:
a memory; and
a processor coupled to the memory, wherein the processor is configured to execute the method according to any one of claims 1 to 10 based on instructions stored in the memory.

13. A vehicle, comprising:
the vehicle operation control apparatus according to claim 11 or 12.

14. A computer-readable storage medium storing computer instructions, which when executed by a processor, cause the processor to perform the vehicle operation control method according to any of claims 1 to 10.

15. A computer program comprising instructions, which when executed by the processor, cause the processor to perform the vehicle operation control method according to any of claims 1 to 10.
